(19) Europäisches Patentamt
European Patent Office
Office européen des brevets

(11) Veröffentlichungsnummer: **0 190 999 B1**

(12) EUROPÄISCHE PATENTSCHRIFT

(45) Veröffentlichungstag der Patentschrift: **22.07.92**

(51) Int. Cl.5: **C09B 67/10**

(21) Anmeldenummer: **86810056.1**

(22) Anmeldetag: **31.01.86**

# (54) Verfahren zur Herstellung farbstarker Pigmente.

(30) Priorität: **06.02.85 CH 524/85**

(43) Veröffentlichungstag der Anmeldung:
**13.08.86 Patentblatt 86/33**

(45) Bekanntmachung des Hinweises auf die Patenterteilung:
**22.07.92 Patentblatt 92/30**

(84) Benannte Vertragsstaaten:
**CH DE FR GB IT LI**

(56) Entgegenhaltungen:
**EP-A- 0 094 911**
**DE-A- 1 914 271**

(73) Patentinhaber: **CIBA-GEIGY AG**
**Klybeckstrasse 141**
**CH-4002 Basel(CH)**

(72) Erfinder: **Bäbler, Fridolin, Dr.**
**Route du Couchant 12**
**CH-1723 Marly(CH)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Es ist bekannt, dass man durch Protolyse der Salze von Pigmenten aus der Reihe der Diketopyrrolo-pyrrole, Chinacridone, Isoindolinone und Isoindoline zu konditionierten Pigmentformen gelangt.

Die vorliegende Erfindung betrifft nun ein Verfahren zur Herstellung farbstarker Pigmente aus der Reihe der Diketopyrrolo-pyrrole, Chinacridone, Isoindolinone und Isoindoline durch Protolyse des durch Behandlung des Rohpigmentes mit einer starken Base oder bei der Synthese anfallenden Pigmentsalzes, dadurch gekennzeichnet, dass man das Pigmentsalz in einem organischen Lösungsmittel mit Wasser behandelt und das organische Lösungsmittel unmittelbar während der Protolyse entfernt.

Das erfindungsgemässe Verfahren eignet sich insbesondere für Diketopyrrolopyrrolpigmente, wie sie beispielsweise nach dem in der EP-A 94 911 beschriebenen Verfahren erhalten werden, sowie für deren Mischungen untereinander oder mit Chinacridonen und anderen Pigmenten.

In vielen Fällen fallen die zu behandelnden Pigmente in der Syntheseendstufe direkt als Alkalisalze an. Andernfalls können sie durch Nachbehandlung des Pigments oder der Pigmentmischung mit einer starken Base, beispielsweise einem Alkalihydroxid oder -alkoholat, ferner Ammoniak oder einem Alkylamin, beispielsweise Methyl- oder Aethylamin in einem polaren organischen Lösungsmittel in die Salze verwandelt werden.

Als organische Lösungsmittel eignen sich insbesondere polare organische Lösungsmittel wie z.B.: Amide, wie Dimethylformamid, Dimethylacetamid oder Tetramethylharnstoff, Nitrile, wie Acetonitril, Ketone, wie Aceton, Methyläthylketon, Cyclohexanon, Aether wie Glykoläther, insbesondere aber Alkohole, wie Methanol, Aethanol, Propanol, Butanol, Pentanol, Hexanol oder Heptanol und insbesondere tert. Amylalkohol sowie Mischungen der erwähnten Alkohole. Geeignete unpolare Lösungsmittel sind z.B. aromatische Kohlenwasserstoffe, wie z.B. Benzol, Toluol, Xylol sowie chlorierte aliphatische Kohlenwasserstoffe oder Benzine.

Das Pigmentsalz kann im organischen Lösungsmittel in gelöstem, teilweise gelöstem oder ungelöstem Zustand vorliegen.

Das zur Protolyse verwendete Wasser kann gegebenenfalls noch anorganische oder organische Säuren enthalten, wie Salz-, Schwefel-, Phosphor-, Kohlensäure, Ameisensäure, Essigsäure, Oxalsäure oder p-Toluolsulfonsäure; bevorzugt wird aber nur Wasser verwendet.

Die Protolyse erfolgt zweckmässig bei Temperaturen von 15 bis 100°C, bevorzugt oberhalb 95°C.

Die Entfernung des Lösungsmittels erfolgt unmittelbar während der Protolyse und kann unter vermindertem Druck oder bevorzugt durch Einleiten von Wasserdampf erfolgen. Durch das gleichzeitige Abdestillieren des Lösungsmittels während der Protolyse wird das Wachstum der gebildeten Pigmentkristalle weitgehend unterbunden, so dass besonders fein kristalline und dementsprechend farbstarke Pigmente erhalten werden. In gewissen Fällen kann die Protolyse mit einer Umwandlung der Kristallmodifikation verbunden sein.

Die erhaltenen Pigmente können aus dem Reaktionsgemisch durch Abfiltrieren isoliert werden. Von der Synthese herrührende alkalisch oder sauer lösliche Verunreinigungen können durch Einstellung des pH-Wertes der nach der Protolyse erhaltenen wässerigen Pigmentsuspension bei der Filtration in gelöstem Zustand ideal vom Pigment abgetrennt werden. Man erzielt somit farbstarke und besonders reine Pigmente hoher Sättigung.

Es ist überraschend, dass bei Protolysetemperaturen von über 90°C so feinkristalline Pigmente erzielt werden können.

Die erfindungsgemäss erhaltenen Pigmente weisen im Normalfall ausgezeichnete Dispergiereigenschaften beim Applizieren in Kunststoffen und Lacken auf. Gegebenenfalls kann die Zugabe von Additiven, beispielsweise Dispergatoren, wie Polyglykoläther, Fettsäuren, Kolophoniumseife, Anlagerungsprodukte an Alkylenoxiden, besonders Aethylenoxid an höhere Fettsäuren, oder Alkylammoniumverbindungen, wie Alkylammoniumpolyglykoläther zusätzlich einen positiven Konditioniereffekt bewirken. Die Additive können dabei dem polaren organischen Lösungsmittel oder dem Wasser vor der Protolyse, oder zur wässerigen Pigmentsuspension nach der Protolyse zugefügt werden.

Ein weiterer Vorteil des erfindungsgemässen Verfahrens besteht in der Möglichkeit, die erhaltenen feinkristallinen Pigmente ohne weitere mechanische Zerkleinerung direkt ausgehend vom Filterkuchen z.B. über den Flushprozess, zu Pigmentpräparaten zu verarbeiten.

Die erfindungsgemäss erhaltenen Pigmente eignen sich für alle Pigmentanwendungen und zeichnen sich durch hohe Farbstärke und Transparenz, gute Licht-, Wetter- und Hitzebeständigkeiten, hohe Reinheit und Sättigung, sowie eine gute Dispergierbarkeit bei der Einreibung in Kunststoffen und Lacken aus.

Beispiel 1: In einem 750 ml fassenden Glasbehälter werden 180 ml tert.-Amylalkohol vorgelegt und langsam Stickstoff eingeleitet, 10,4 g Natrium, anschliessend als Emulgator 0,2 g des Natriumsalzes des Sulfobernsteinsäure-bis-2-äthylhexylesters werden in tert.-Amylalkohol gegeben und das Gemisch langsam auf 95-102°C erwärmt. Unter heftigem Rühren wird das Metall im Alkohol aufgelöst.

Die erhaltene Lösung wird auf ca. 90 ° C abgekühlt und mit 41,2 g p-Chlorbenzonitril versetzt. Das Gemisch wird auf 110 ° C erwärmt und unter Stickstoffeinleitung und Rühren werden 30,4 g Bernsteinsäurediisopropylester innert 2 ½ Stunden zugetropft. Man lässt 2 Stunden bei 100-105 ° C ausreagieren und trägt die Pigmentsalzsuspension bei 90 ° C unter gleichzeitigem Einleiten von Wasserdampf und Abdestillieren der organischen Lösungsmittel auf Wasser aus. Die erhaltene wässerige Pigmentsuspension wird abfiltriert und mit heissem Wasser neutral gewaschen, der Presskuchen im Vakuumtrockenschrank bei 80 ° C getrocknet und das Pigment pulverisiert. Man erhält 38 g eines roten Pigmentpulvers der Formel

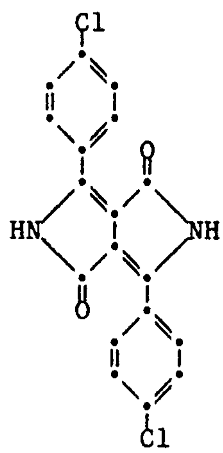

welches, in Weich-PVC-Folien eingearbeitet, transparente und sehr farbstarke Färbungen hoher Reinheit und Sättigung ergibt.

Beispiel 2: In einem 1500 ml fassenden Glasbehälter werden 500 ml tert.-Amylalkohol vorgelegt und langsam Stickstoff eingeleitet. 27,6 g Natrium, anschliessend als Emulgator 0,4 g Sulfobernsteinsäure-bis-2-äthyl-hexylester-Na-Salz werden in den tert.-Amylalkohol gegeben und das Gemisch langsam auf 95-102 ° C erwärmt. Unter heftigem Rühren wird das geschmolzene Metall in Alkohol aufgelöst. Die erhaltene Lösung wird auf 80 ° C abgekühlt und mit 81,6 g Benzonitril, sowie 1,1 g p-Chlorbenzonitril versetzt. Das Gemisch wird auf 110 ° C erwärmt, unter Stickstoffeinleitung und Rühren lässt man langsam innert 3 Stunden 80,8 g Bernsteinsäurediisopropylester zutropfen und gleichzeitig das sich bildende Isopropanol abdestillieren. Die Temperatur sinkt gegen Ende der Reaktion auf 104 ° C. Die erhaltene Pigmentsalzsuspension lässt man 2 Stunden ausreagieren, gleichzeitig destilliert man etwas Lösungsmittel ab. Danach wird das Reaktionsgemisch auf Raumtemperatur abgekühlt. In einem 2500 ml fassenden Glasbehälter werden 550 g Wasser vorgelegt und auf 95 ° erwärmt. Die Pigmentsalzsuspension lässt man bei einer Temperatur von 95 ° C unter gutem Rühren, Einleitung von Wasserdampf und gleichzeitigem Abdestillieren der organischen Lösungsmittel in das vorgelegte Wasser tropfen, dabei wird das Pigmentsalz zum Pigment protolysiert. Die wässrige Pigmentsuspension wird ½ Stunde weiterverrührt, dann heiss abfiltriert, mit heissem Wasser neutral gewaschen, der Presskuchen im Vakuumtrockenschrank bei 80 ° C getrocknet und zerkleinert. Man erhält 70 g rotes Pigmentpulver, das, in PVC eingearbeitet, transparente rote Färbungen ergibt.

Beispiel 3: Verfährt man analog wie in Beispiel 1 beschrieben, trägt aber die Pigmentsalzsuspension bei 40-50 ° C unter vermindertem Druck und gleichzeitigem Abdestillieren der organischen Lösungsmittel auf Wasser aus, so erhält man ein rotes Pigmentpulver, welches, in Lacken und Kunststoffen eingearbeitet, transparente und farbstarke Färbungen ergibt.

Beispiel 4: In einem 1500 ml fassenden Glasbehälter werden 300 ml tert.-Amylalkohol vorgelegt und langsam Stickstoff eingeleitet. 2,5 g Natrium, anschliessend als Emulgator 0,2 g Sulfobernsteinsäure-bis-2-äthylhexylester-Na-Salz werden in den tert.-Amylalkohol gegeben und das Gemisch langsam auf 95-102 ° C erwärmt. Unter heftigem Rühren wird das geschmolzene Metall im Alkohol aufgelöst. Die erhaltene Lösung wird auf 80-90 ° C abgekühlt und danach werden 26,7 g rohes Isoindolinpigment der Formel

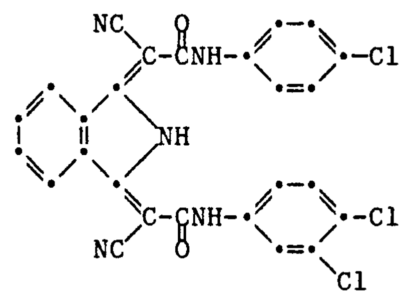

eingetragen und während 3 Stunden bei Rückflusstemperatur gerührt. Dabei bildet sich das Pigmentsalz. Das Reaktionsgemisch wird auf Raumtemperatur abgekühlt.

In einem 2500 ml fassenden Glasbehälter werden 300 g Wasser vorgelegt und auf Rückflusstemperatur erwärmt. Die Pigmentsalzsuspension lässt man bei einer Temperatur von 95 ° C unter gleichzeitigem Einleiten von Wasserdampf und Abdestillieren des organischen Lösungsmittels zum vorgelegten Wasser zutropft, dabei fällt das Pigment aus.

Die Pigmentsuspension wird während 30 Minuten weitergerührt, heiss abfiltriert, der Presskuchen mit heissem Wasser neutral gewaschen, im Vakuumtrockenschrank bei 80°C getrocknet und pulverisiert. Man erhält 24 g orangefarbiges Pigment, das eingefärbt in Alkyd-Melamin-Einbrennlacken gegenüber dem Ausgangspigment wesentlich farbstärkere und transparentere Färbungen ergibt.

Beispiel 5: Verfährt man analog wie in Beispiel 4 beschrieben, verwendet aber anstelle von 26,7 g Isoindolinpigment 32,1 g rohes C.I. Pigment Gelb 110, so erhält man 30 g gelbes Pigmentpulver, welches gegenüber dem Rohpigment wesentlich farbstärkere, transparentere und grünstichigere Färbungen beim Applizieren in Lacken und Kunststoffen ergibt.

Beispiel 6: Verfährt man analog wie in Beispiel 5 beschrieben, verwendet aber anstelle von tert.-Amylalkohol Methanol als Lösungsmittel, so erhält man ein Pigment mit gleich guten Eigenschaften.

Beispiel 7: Verfährt man analog wie in Beispiel 6 beschrieben, verwendet aber anstelle von 2,5 g Natrium 4,5 g Aetznatron, so erhält man ein Pigment mit analog guten Eigenschaften.

Beispiel 8: Verfährt man analog wie in Beispiel 5 beschrieben, verwendet aber anstelle von tert.-Amylalkohol Isopropanol als Lösungsmittel, so erhält man ein gelbes Pigment mit gleich guten Eigenschaften.

Beispiel 9: Verfährt man analog wie in Beispiel 5 beschrieben, verwendet aber anstelle von tert.-Amylalkohol Aethylenglykolmonomethyläther als Lösungsmittel, so erhält man ein gelbes Pigment mit gleich guten Eigenschaften.

Beispiel 10: Verfährt man analog wie in Beispiel 5 beschrieben, verwendet aber anstelle von tert.-Amylalkohol Toluol als Lösungsmittel, so erhält man ein gelbes Pigment mit gleich guten Eigenschaften.

Beispiel 11: Verfährt man analog wie in Beispiel 6 beschrieben, verwendet aber anstelle von 2,5 g Natriummetall 7,5 g Kaliummethylat, so erhält man ein gelbes Pigment mit gleich guten Eigenschaften.

Beispiel 12: Verfährt man analog wie in Beispiel 11 beschrieben, lässt aber die Pigmentsalzsuspension in 300 g verdünnter Salzsäure anstelle von Wasser zutropfen, so erhält man ein gelbes Pigment mit analog guten Eigenschaften.

Beispiel 13: Verfährt man analog wie in Beispiel 12 beschrieben, lässt aber die Pigmentsalzsuspension in 300 g 80%ige wässerige Essigsäure anstelle von verdünnter Salzsäure tropfen, so erhält man ein gelbes Pigment mit analog guten Eigenschaften.

Beispiel 14: In einem 750 ml fassenden Glasbehälter werden 300 ml tert.-Amylalkohol vorgelegt und langsam Stickstoff eingeleitet. 6 g Natrium, anschliessend 0,2 g Sulfobernsteinsäure-bis-2-äthylhexylester-Na-Salz werden in tert.-Amylalkohol gegeben und das Gemisch langsam auf 95-100°C erwärmt. Unter heftigem Rühren wird das Metall im Alkohol aufgelöst. Die erhaltene Lösung wird auf 90° abgekühlt und 37,6 g rohes $\beta$-Chinacridonpigment werden eingetragen. Man rührt 3 Stunden bei Rückflusstemperatur. Es bildet sich eine blaue Lösung des Pigmentsalzes im tert.-Amylalkohol. Die Lösung wird auf Raumtemperatur abgekühlt, dabei fällt das Pigmentsalz zum Teil aus.

In einem 2500 ml fassenden Glasbehälter werden 300 g Wasser vorgelegt, auf Rückflusstemperatur erwärmt und danach wird die Pigmentsalzsuspension unter gutem Rühren bei Temperaturen von 95°C unter Einleiten von Wasserdampf und gleichzeitigem Abdestillieren von tert.-Amylalkohol in das vorgelegte Wasser getropft, dabei wird das Pigmentsalz protolysiert. Die erhaltene Pigmentsuspension wird während 30 Minuten bei Rückflusstemperatur weitergerührt, heiss abfiltriert, der Presskuchen mit heissem Wasser neutral gewaschen und im Vakuumtrockenschrank bei 80°C getrocknet. Man erhält ein rot violettes Chinacridonpigment, welches als Hauptkomponente die $\beta$-Modifikation enthält. Appliziert in TSA- und AM-Einbrennlacken erhält man transparente, sehr farbstarke rotviolette Färbungen mit ausgezeichneten Wetterechtheiten.

Beispiel 15: Verfährt man wie in Beispiel 14 beschrieben, verwendet aber anstelle von tert.-Amylalkohol Dimethylformamid als Lösungsmittel, so erhält man ein Chinacridonpigment mit gleich guten Eigenschaften.

Beispiel 16: Verfährt man analog wie in Beispiel 14 beschrieben, verwendet aber anstelle von rohem $\beta$-Chinacridon 37,6 g $\gamma$-Chinacridon, so erhält man 34 g Chinacridonpigment, welches als Hauptkomponente die $\beta$-Modifikation in einer sehr fein kristallinen, farbstarken, echten Pigmentform enthält.

Beispiel 17: In einem 750 ml fassenden Glasbehälter werden 324 ml tert.-Amylalkohol vorgelegt und langsam Stickstoff eingeleitet. 5,8 g Natrium, anschliessend als Emulgator 0,2 g Sulfobernsteinsäure-bis-2-äthyl-hexylester-Na-Salz werden in den tert.-Amylalkohol gegeben und das Gemisch langsam auf 95-100°C erwärmt. Unter heftigem Rühren wird das Metall im Alkohol aufgelöst. Die erhaltene Lösung wird auf 90°C abgekühlt. 33,7 g rohes $\beta$-Chinacridonpipgment werden eingetragen. Man rührt 2 Stunden bei Rückflusstemperatur, dabei geht das Chinacridon als Pigmentsalz in eine blauviolette Lösung über. 4,2 g 1,4-Diketo-3,6-bis-(4'-chlorphenyl)-pyrrolo-[3,4-c]-pyrrol werden danach zur Reaktionsmischung gegeben. Man rührt weitere 3 Stunden beim Rückfluss, bis sich das Diketopyrrolopyrrolpigment ebenfalls in das Pigmentsalz umgewandelt hat. Dann wird das Gemisch auf Raumtemperatur abgekühlt, wobei die Pigmentsalze grösstenteils ausfallen.

In einem 2500 ml fassenden Glasbehälter werden 450 g Wasser vorgelegt, und auf Rückflusstemperatur erwärmt. Die Suspension der Pigmentsalze lässt man danach bei Temperaturen von 95 °C unter gutem Rühren, Einleiten von Wasserdampf und gleichzeitigem Abdestillieren des organischen Lösungsmittels ins Wasser tropfen, dabei wird das Pigmentsalz zum Pigment protolysiert. Die Pigmentsuspension lässt man während 30 Minuten ausrühren und filtriert heiss ab. Der Presskuchen wird mit Wasser neutral gewaschen, im Vakuumtrockenschrank bei 80 °C getrocknet und zerkleinert. Man erhält 37 g rotes Pigmentpulver, welches farbstarke, transparente rotviolette Färbungen mit ausgezeichneten Echtheiten bei der Applizierung in Kunststoffen und Lacken ergibt.

Beispiel 18: Eine Mischung von 130 g Steatitkugeln von 8 mm Durchmesser, 47,5 g Alkydmelamineinbrennlack, bestehend aus 60 g ®Beckosol 27-320 (Reichhold Chemie AG) 60 %-ig in Xylol, 36 g ®Super-Beckamin 13-501 (Reichhold Chemie AG) 50%-ig in Xylol:Butanol (2:1-Gemisch), 2 g Xylol und 2 g Aethylenglykolmonomethyläther, und 2,5 g des nach Beispiel 11 erhaltenen Chinacridonpigmentes werden in einer 200 ml fassenden Glasflasche mit Twist-off-Verschluss während 120 Stunden auf einem Rollgestell dispergiert. Nach Abtrennen der Steatitkugeln werden 2,4 g der so dispergierten Volltonmischung mit 60 g Titandioxid ®Kronos RN 59 (Kronos Titan GmbH) und weiteren 24,0 g des Alkydmelamineinbrennlacks vermischt, auf Aluminiumbleche gespritzt und anschliessend während 30 Minuten bei 130 °C eingebrannt. Man erhält blaustichige rote Färbungen mit ausgezeichneten Echtheiten.

Beispiel 19: Eine Mischung von 1,0 g des nach Beispiel 5 erhaltenen Isoindolinonpigments, 1,0 g Antioxydant ®IRGANOX 1010 der CIBA-GEIGY AG und 1000 g Polyäthylen-HD Granulat ®Vestolen A 60-16 der Firma Hüls wird während 15 Minuten in einer Glasflasche auf einer Rollbank vorgemischt. Danach wird die Mischung in zwei Passagen auf einem Einwellenextruder extrudiert, das so erhaltene Granulat auf der Spritzgussmaschine (Allround Aarburg 200) bei 220 °C zu Platten verspritzt und 5 Minuten bei 180 °C nachgepresst. Die Pressplatten weisen farbstarke gelbe Nuancen mit ausgezeichneten Echtheiten auf.

Beispiel 20: 0,6 g der gemäss Beispiel 1 erhaltenen Pigmentzusammensetzungen werden mit 67 g Polyvinylchlorid, 33 g Dioctylphthalat, 2 g Dibutylzinndilaurat und 2 g Titandioxid zusammengemischt und auf dem Walzenstuhl während 15 Minuten bei 160 °C zu einer dünnen Folie verarbeitet. Die so erzeugte rote PVC-Folie ist sehr farbstark, migrations- und lichtbeständig.

Beispiel 21: 1000 g Polypropylengranulat ®DAPLEN PT-55 der Firma Chemie LINZ und 20 g eines 50 %-igen Pigmentpräparates, bestehend aus 10 g der nach Beispiel 2 erhaltenen Pigmentzusammensetzung und 10 g Mg-Behenat, werden in einer Mischtrommel intensiv vermischt. Das so behandelte Granulat wird bei 260 bis 285 °C nach dem Schmelzspinnverfahren versponnen. Man erhält rotgefärbte Fasern mit sehr guten Licht- und textilen Echtheiten.

## Patentansprüche

1. Verfahren zur Herstellung farbstarker Pigmente aus der Reihe der Diketopyrrolo-pyrrole, Chinacridone, Isoindolinone und Isoindoline durch Protolyse des durch Behandlung des Rohpigmentes mit einer starken Base oder bei der Synthese anfallenden Pigmentsalzes, dadurch gekennzeichnet, dass man das Pigmentsalz in einem organischen Lösungsmittel mit Wasser behandelt und das organische Lösungsmittel unmittelbar während der Protolyse entfernt.

2. Verfahren gemäss Anspruch 1, dadurch gekennzeichnet, dass man als Pigmente Diketopyrrolo-pyrrole verwendet.

3. Verfahren gemäss Anspruch 1, dadurch gekennzeichnet, dass man als Pigmente Chinacridon-, Isoindolinon- oder Isoindolinpigmente verwendet.

4. Verfahren gemäss Anspruch 1, dadurch gekennzeichnet, dass man als Pigmente Gemische von Diketopyrrolo-pyrrolpigmenten untereinander oder mit Chinacridonen oder anderen Pigmenten verwendet.

5. Verfahren gemäss Anspruch 1, dadurch gekennzeichnet, dass als Lösungsmittel ein polares organisches Lösungsmittel verwendet wird.

6. Verfahren gemäss Anspruch 1, dadurch gekennzeichnet, dass man als polares organisches Lösungsmittel einen Alkohol verwendet.

7. Verfahren gemäss Anspruch 6, dadurch gekennzeichnet, dass man als Alkohol tertiären Amylalkohol verwendet.

8. Verfahren gemäss Anspruch 1, dadurch gekennzeichnet, dass man die Protolyse bei Temperaturen zwischen 15 bis 100 °C durchführt.

9. Verfahren gemäss Anspruch 1, dadurch gekennzeichnet, dass man das Lösungsmittel während der Protolyse durch Destillation entfernt.

## Claims

**1.** A process for the preparation of tinctorially strong pigments of the series of the diketopyrrolopyrroles, quinacridones, isoindolinones and isoindolines by protolysis of the pigment salt obtained by treating the crude pigment with a strong base or obtained during the synthesis, which comprises treating the pigment salt in an organic solvent with water and removing the organic solvent directly during the protolysis.

**2.** A process according to claim 1, wherein the pigments employed are diketopyrrolopyrroles.

**3.** A process according to claim 1, wherein the pigments employed are quinacridone, isoindolinone or isoindoline pigments.

**4.** A process according to claim 1, wherein the pigments employed are mixtures of diketopyrrolopyrrole pigments with each other or with quinacridones or other pigments.

**5.** A process according to claim 1, wherein the solvent employed is a polar organic solvent.

**6.** A process according to claim 1, wherein the polar organic solvent is an alcohol.

**7.** A process according to claim 6, wherein the alcohol employed is tertiary amyl alcohol.

**8.** A process according to claim 1, wherein the protolysis is carried out at temperatures from 15 to 100 °C.

**9.** A process according to claim 1, wherein the solvent is removed by distillation during the protolysis.

## Revendications

**1.** Procédé de préparation de pigments à fortes colorations de la série des dicétopyrrolo-pyrroles, quinacridones, iso-indolinones et iso-indolines, par protolyse du sel du pigment formé par traitement du pigment brut avec une base forte ou formé au cours de sa synthèse, procédé caractérisé en ce que l'on traite le sel du pigment avec de l'eau dans un solvant organique et on élimine aussitôt le solvant au cours de la protolyse.

**2.** Procédé selon la revendication 1, caractérisé en ce que l'on traite des pigments de dicétopyrrolo-pyrroles.

**3.** Procédé selon la revendication 1, caractérisé en ce que l'on traite des pigments de quinacridones, d'iso-indolinones ou d'iso-indolines.

**4.** Procédé selon la revendication 1, caractérisé en ce que l'on traite des mélanges de pigments de dicétopyrrolo-pyrroles, entre eux ou avec des pigments de quinacridones ou d'autres pigments.

**5.** Procédé selon la revendication 1, caractérisé en ce que l'on emploie comme solvant un solvant organique polaire.

**6.** Procédé selon la revendication 1, caractérisé en ce que le solvant polaire est un alcool.

**7.** Procédé selon la revendication 6, caractérisé en ce que l'alcool est de l'alcool amylique tertiaire.

**8.** Procédé selon la revendication 1, caractérisé en ce que l'on effectue la protolyse à des températures de 15 à 100 °C.

**9.** Procédé selon la revendication 1, caractérisé en ce que l'on élimine le solvant par distillation au cours de la protolyse.